# EUROPEAN PATENT SPECIFICATION

(11) **EP 2 862 911 B1**
(45) Date of publication and mention of the grant of the patent: **06.05.2020**
(21) Application number: 12879380.9
(22) Date of filing: 13.12.2012
(51) Int. Cl.: C09J 4/02, C09J 11/00, C09J 7/00, C08F 220/18, C09J 133/08

(54) **ADHESIVE AGENT COMPOSITION HAVING IMPROVED BUBBLE STABILITY AND METHOD FOR PREPARING SAME**
KLEBEMITTELZUSAMMENSETZUNG MIT ERHÖHTER BLASENSTABILITÄT UND VERFAHREN ZUR HERSTELLUNG DAVON
COMPOSITION D'AGENT ADHÉSIF AYANT UNE STABILITÉ AMÉLIORÉE EN TERMES DE BULLES ET SON PROCÉDÉ DE PRÉPARATION

(30) Priority: 19.06.2012 KR 20120065365
(43) Date of publication of application: 22.04.2015
(73) Proprietor: LG CHEM, LTD., Yeongdeungpo-gu Seoul 07336 (KR)
(72) Inventor: KIM, Ji Hye, Bucheon-si Gyeonggi-do 420-765 (KR); KIM, Jang Soon, Seongnam-si Gyeonggi-do 463-889 (KR); JANG, Ae Jung, Incheon 401-731 (KR)
(74) Representative: Plasseraud IP
(86) International application number: PCT/KR2012/010849
(87) International publication number: WO 2013/191339

(56) References cited:
- EP-A1- 2 060 611
- EP-A1- 2 374 854
- EP-A1- 2 789 654
- JP-A- 2011 116 940
- JP-A- 2011 190 290
- KR-A- 20090 132 548
- US-A1- 2010 236 716

## Description

### [Technical Field]

The present invention relates to an adhesive composition exhibiting improved bubble stability and a method for preparing the same.

### [Background Art]

Typically, when an adhesive composition contains bubbles, a method for increasing viscosity is widely used to secure bubble stability. However, even though viscosity is adjusted, if the adhesive composition includes a small amount of acrylic acid, the adhesive composition exhibits high bubble stability in winter in which air temperature is low, whereas the adhesive composition exhibits deteriorated bubble stability in summer in which air temperature is high. Thus, it is difficult to produce an acrylic foam tape including a bubble-dispersed adhesive composition which is not affected by external temperature.

Japanese Patent Laid-open Publication No. 2011-190290 discloses an adhesive composition including bubbles of carbon dioxide and inert gas such as argon. However, this publication is aimed at facilitating winding of an adhesive tape including the adhesive composition while suppressing protrusion of the adhesive composition, and does not disclose subject matter relating to stability of bubbles included in the adhesive composition.

EP-A-2 060 611, EP-A-2 374 854 and EP-A-2 862 911 disclose adhesive compositions comprising a) a copolymer of 2-ethylhexyl acrylate and acrylic acid and b) glass balloons.

### [Disclosure]

### [Technical Problem]

It is an aspect of the present invention to provide an adhesive composition exhibiting excellent bubble stability regardless of external temperature or viscosity thereof.

It is another aspect of the present invention to provide a method for preparing the adhesive composition as set forth above.

### [Technical Solution]

In accordance with one aspect of the present invention, an adhesive composition includes: a copolymer in which 15 parts by weight to 40 parts by weight of 2-hydroxyethyl (meth)acrylate is polymerized based on 100 parts by weight of an alkyl (meth)acrylic acid ester monomer; and hollow glass fillers or bubbles.

The alkyl (meth)acrylic acid ester monomer may include at least one selected from the group consisting of methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl (meth)acrylate, isooctyl (meth)acrylate, isononyl (meth)acrylate, lauryl (meth)acrylate, tetradecyl (meth)acrylate, and combinations thereof.

The hollow glass fillers or the bubbles may have a spherical shape.

The hollow glass fillers or the bubbles may have a diameter from 20 µm to 300 µm.

The hollow glass fillers is present in an amount of 0.1 parts by weight to 20 parts by weight based on 100 parts by weight of the (meth)acrylic acid ester monomer.

The bubbles may be present in an amount of 0.1% by volume (vol%) to 10 vol% by volume.

The adhesive composition has a density from 0. 6 to 0.8 g/m³.

In accordance with another aspect of the present invention, a method for preparing an adhesive composition as defined above includes: preparing a copolymer by thermal polymerizing 15 parts by weight to 40 parts by weight of 2-hydroxyethyl (meth)acrylate based on 100 parts by weight of an alkyl (meth)acrylic acid ester monomer; preparing a mixture by adding a surfactant, a photoinitiator and a photocuring agent to the copolymer; and adding hollow glass fillers present in an amount of 0.1 parts by weight to 20 parts by weight based on 100 parts by weight of the alkyl (meth)acrylic acid ester monomer to the mixture or injecting bubbles into the mixture.

The method may further include curing the mixture including the hollow glass filler or the bubbles therein.

### [Advantageous Effects]

The adhesive composition prevents the hollow glass fillers or the bubbles in the copolymer from floating to a surface of the adhesive composition and then bursting, and exhibits improved bubble stability.

In addition, the adhesive composition is coated onto one surface or both surfaces of acrylic foam, thereby allowing the adhesive composition-coated foam to be used as a foam tape.

### [Description of Drawings]

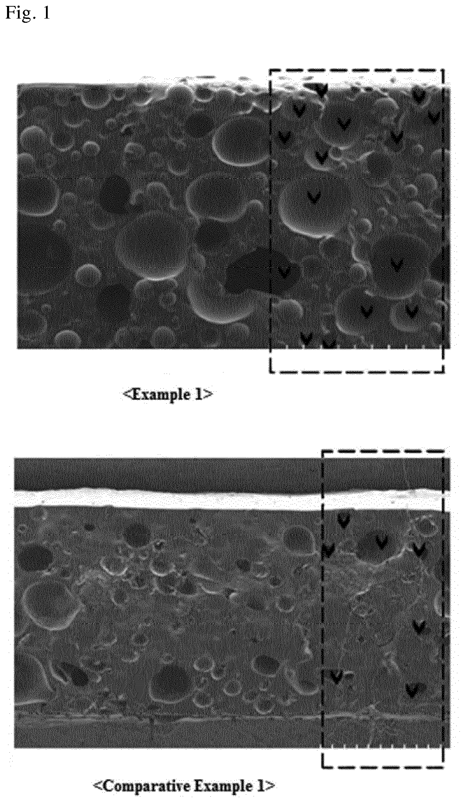

Fig. 1 shows SEM images of specimens of Example 1 and Comparative Example 1, respectively.

### [Best Mode]

Hereinafter, embodiments of the present invention will be described in detail. It should be understood that the following embodiments are provided for illustrative purposes only and are not to be construed in any way as limiting the present invention. The scope of the present invention should be defined only by the accompanying claims and equivalents thereof.

In the drawings, portions irrelevant to the description are omitted for clarity. Like components will be denoted by like reference numerals throughout the specification.

Hereinafter, embodiments of the present invention will be described in detail.

### Adhesive composition

In accordance with one aspect of the present invention, an adhesive composition includes: a copolymer in which 15 parts by weight to 40 parts by weight of 2-hydroxyethyl (meth)acrylate monomer is polymerized based on 100 parts by weight of an alkyl (meth)acrylic acid ester monomer; and hollow glass fillers or bubbles, wherein the hollow glass fillers are present in an amount of 0.1 parts by weight to 20 parts by weight based on 100 parts by weight of the alkyl (meth)acrylic acid ester monomer, wherein the adhesive composition has a density from 0.6 g/m³ to 0.8 g/m³.

The alkyl (meth)acrylic acid ester monomer may be any alkyl (meth)acrylic acid ester monomer without limitation. Here, if an alkyl group included in the monomer has an excessively long chain, the adhesive composition can suffer from deterioration of cohesion and has difficulty in adjustment of glass transition temperature (Tg) and adhesion thereof. Thus, the alkyl (meth)acrylic acid ester monomer may be a C₁ to C₁₄ alkyl group-containing (meth)acrylic acid ester monomer.

Specifically, the acrylic acid ester monomer may include at least one selected from the group consisting of methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl (meth)acrylate, isooctyl (meth)acrylate, isononyl (meth)acrylate, lauryl (meth)acrylate, tetradecyl (meth)acrylate, and combinations thereof.

The 2-hydroxyethyl (meth)acrylate monomer copolymerizable with the alkyl (meth)acrylic acid ester monomer serves to adjust durability and cohesion of the adhesive composition.

The adhesive composition includes the hollow glass fillers, in an amount of 0.1 parts by weight to 20 parts by weight based on 100 parts by weight of the alkyl (meth)acrylic acid ester monomer, or the bubbles. Here, the amount of each of the methyl acid ester monomer and the 2-hydroxyethyl (meth)acrylate monomer is limited, whereby the adhesive composition can stably include the hollow glass fillers or the bubbles while the hollow glass fillers or the bubbles maintain a certain shape.

Specifically, due to interaction between functional groups of the alkyl (meth)acrylic acid ester monomer and the 2-hydroxyethyl (meth)acrylate monomer, which are present in a certain amount, the hollow glass fillers or the bubbles, which are forcibly added or injected into the adhesive composition according to the present invention or naturally generated therein, can be prevented from floating to the surface of the adhesive composition and then bursting. As such, since stability of the hollow glass fillers or the bubbles is maintained, the adhesive composition can maintain a certain level or higher of density and distribution of the hollow glass fillers or the bubbles regardless of external temperature.

The adhesive composition includes 15 parts by weight to 40 parts by weight of the 2-hydroxyethyl (meth)acrylate monomer based on 100 parts by weight of alkyl (meth)acrylic acid ester monomer. Since 2-hydroxyethyl (meth)acrylate monomer is present in this amount, cohesion between the polar functional groups can cause interaction between the functional groups of both monomers and a finally cured adhesive composition can exhibit high cohesion and improved adhesion. Furthermore, the adhesive composition can have improved bubble stability by reducing a phenomenon that the forcibly injected bubbles float to the surface of the adhesive composition and then burst.

Within the range 15 parts by weight to 40 parts by weight of 2-hydroxyethyl (meth)acrylate monomer, the adhesive composition can stably include the hollow glass fillers or the bubbles, which have a certain shape.

The hollow glass fillers may include organic hollow glass fillers, inorganic hollow glass fillers, and combinations thereof. Specifically, the hollow glass fillers may include hollow glass bubbles, hollow polymer microspheres, and the like. The glass bubbles refer to lightweight fillers exhibiting high strength and extremely excellent heat resistance and chemical resistance as hollow glass microspheres, which are composed of true glass and have a spherical shape and a low specific gravity. Since the glass bubbles have a much lower specific gravity than fillers used in existing plastics, it can be anticipated that the glass bubbles provide light weight due to the specific gravity thereof, reduction in use of resins, improvement in terms of dimensional stability, deformation after molding, processability, moldability, thermal insulation properties and water resistance.

The hollow polymer microspheres also have a low specific gravity and may be included to reduce the weight of the adhesive composition. For example, commercially available products of the hollow polymer microspheres may include Expancel and Micropearl.

Therefore, since the adhesive composition according to the present invention includes the hollow glass fillers and thus can have a reduced specific gravity, the adhesive composition can be variously utilized while reducing an overall weight of an adherend to which the adhesive composition is applied.

The bubbles may be formed of a gas. The gas may include various gases, such as nitrogen, carbon dioxide, inert gases including argon, without being limited thereto. It is important to use a gas that does not inhibit polymerization of the alkyl (meth)acrylic acid ester monomer and the 2-hydroxyethyl (meth)acrylate monomer nor mixing of additives therewith, as the gas forming the bubbles. Specifically, nitrogen is suitable among gases forming the bubbles since nitrogen does not inhibit polymerization or mixing and can reduce preparation costs.

Although the hollow glass fillers or the bubbles typically have a spherical shape, the hollow glass fillers or the bubbles may have a distorted spherical shape. The hollow glass fillers are similar to a tennis ball and can be kept in a spherical shape more easily than the bubbles.

Specifically, the hollow glass fillers or the bubbles may have a diameter from 20 µm to 300 µm, more specifically from 50 µm to 200 µm. Within this range of the diameter of the hollow glass fillers or the bubbles, the adhesive composition can secure light weight and cushioning properties, and stability of the adhesive composition can be checked by the diameter.

In addition, the hollow glass fillers or the bubbles may be present in an independent form of each other or in a continuous form. That is, the adhesive composition may also include the hollow glass fillers or the bubbles in a continuous form, in which there is fusion-bonding between the hollow glass fillers, between the bubbles, or between the hollow glass fillers and the bubbles.

The hollow glass fillers are present in an amount of 0.1 parts by weight to 20 parts by weight, specifically 3 parts by weight to 10 parts by weight, based on 100 parts by weight of the (meth)acrylic acid ester monomer. Within this range, the adhesive composition allows easy curing shrinkage and can maintain strength. On the other hand, if the hollow glass fillers are present in an excessively small amount, it is difficult to obtain a desired density of the hollow glass fillers, and if the hollow glass fillers are present in an excessively large amount, the adhesive composition can have excessively increased viscosity and thus is difficult to stir or suffers from deterioration in adhesion.

The hollow glass fillers or the bubbles may be uniformly dispersed in the adhesive composition. As the hollow glass fillers or the bubbles exhibit higher stability, the hollow glass fillers or the bubbles can be more uniformly dispersed in the adhesive composition and be contained in a larger amount in the adhesive composition. On the contrary, when the hollow glass fillers or the bubbles exhibit low stability, since the hollow glass fillers or the bubbles burst and thus exhibit deteriorated dispersibility and distribution, the hollow glass fillers or the bubbles cannot be uniformly dispersed and are contained in a relatively small amount in the adhesive composition.

Specifically, the hollow glass fillers or the bubbles may be present in an amount of 0.1 vol% to 10 vol%. Within this range, the adhesive composition can exhibit flexibility and cushioning properties, thereby providing provide an increased attachment area. In addition, since the amount of the bubbles is maintained at a constant volume percentage, the bubbles can be uniformly present in the adhesive composition without bursting.

The adhesive composition has a density from 0.6 g/m³ to 0.8 g/m³. If the density of the adhesive composition is low, it can be inferred that the hollow glass fillers or the bubbles are uniformly dispersed well. On the other hand, if the density of the adhesive composition is high, it can be inferred that the hollow glass fillers or the bubbles have low dispersibility due to bursting thereof.

Therefore, since the amount of each of the monomers forming the copolymer in the adhesive composition is limited, the hollow glass fillers or the bubbles can be uniformly distributed, and the density of the adhesive composition can be maintained within the above range. In addition, the adhesive composition is coated onto one surface or both surfaces of acrylic foam, whereby the adhesive composition-coated foam can be used as a foam tape.

An adhesive composition coating layer may have a thickness of, for example, 100 µm to 3000 µm, specifically from 400 µm to 2000 µm, without being limited thereto. Within this range, the adhesive composition can secure desired cushioning properties and can exhibit improved adhesion to curved or uneven surfaces.

### Method for preparing adhesive composition

In accordance with another aspect of the present invention, a method for preparing an adhesive composition includes: preparing a copolymer by thermally polymerizing 15 parts by weight to 40 parts by weight of a 2-hydroxyethyl (meth)acrylate monomer based on 100 parts by weight of an alkyl (meth)acrylic acid ester monomer; preparing a mixture by adding a surfactant, a photoinitiator and a photocuring agent to the copolymer; and adding hollow glass fillers in an amount of 0.1 parts by weight to 20 parts by weight based on 100 parts by weight of the alkyl (meth)acrylic acid ester monomer to the mixture or injecting bubbles into the mixture.

The method for preparing an adhesive composition includes preparing the copolymer by polymerizing 15 parts by weight to 40 parts by weight of the 2-hydroxyethyl (meth)acrylate monomer based on 100 parts by weight of the alkyl (meth)acrylic acid ester monomer. The preparation of the copolymer is achieved by thermal polymerization of the alkyl (meth)acrylic acid ester monomer and the 2-hydroxyethyl (meth)acrylate monomer. Here, thermal polymerization may be performed by any method known in the art.

For example, thermal polymerization may be performed at a temperature from 50°C to 70°C, specifically from 50°C to 60°C, for 1 hour to 3 hours, specifically for 2 hours. Here, the alkyl (meth)acrylic acid ester monomer and the 2-hydroxyethyl (meth)acrylate monomer, which are subjected to polymerization, may be added in a lump, separately or continuously added.

The method for preparing an adhesive composition includes preparing the mixture by adding the surfactant, the photoinitiator and the photocuring agent to the copolymer in which the alkyl (meth)acrylic acid ester monomer and the 2-hydroxyethyl (meth)acrylate monomer are polymerized. Here, the surfactant, the photoinitiator and the photocuring agent, which are used, are not particularly limited, and suitable additives may be used depending upon purposes of the adhesive composition.

The surfactant may include ionic surfactants and silicone surfactants. The surfactant may be present in an amount of 0.01 parts by weight to 5 parts by weight, specifically 0.05 parts by weight to 3 parts by weight, based on 100 parts by weight of the polymerized resin.

The photoinitiator may include, for example, benzoin, benzoin methyl ether, benzoin benzoin ethyl ether, benzoin isopropyl ether, benzoin n-butyl ether, benzoin isobutyl ether, acetophenone, dimethylamino acetophenone, 2,2-dimethoxy-2-phenylacetophenone, 2,2-diethoxy-2-phenylacetophenone, 2-hydroxy-2-methyl-1-phenylpropan-1-one, 1-hydroxycyclohexyl phenyl ketone, 2-methyl-1-[4-(methylthio)phenyl] -2-morpholino-propan-1 -one, 4-(2-hydroxyethoxy)phenyl-2-(hydroxy-2-propyl)ketone, benzophenone, p-phenylbenzophenone, 4,4'-diethylammobenzophenone, dichlorobenzophenone, 2-methylanthraquinone, 2-ethylanthraquinone, 2-t-butylanthraquinone, 2-ammoanthraquinone, 2-methylthioxanthone, 2-ethylthioxanthone, 2-chlorothioxanthone, 2,4-dimethylthioxanthone, 2,4-diethylthioxanthone, benzyl dimethyl ketal, acetophenone dimethyl ketal, p-dimethylaminobenzoic acid ester, oligo[2-hydroxy-2-methyl-1-[4-(1-methylvinyl)phenyl]propanone], 2,4,6-trimethylbenzoyldiphenylphosphine oxide, bis(2,4,6-trimethylbenzoyl)phenylphosphine oxide, α,α-methoxy-α-hydroxyacetophenone, 2-benzoyl-2-(dimethylamino)-1 - [4-(4-morphonyl)phenyl] -1-butanone, 2,2-dimethoxy-2-phenylacetophenone, without being limited thereto.

The photoinitiator may be present in an amount of about 0.01 parts by weight to about 5 parts by weight, specifically about 0.05 parts by weight to about 3 parts by weight, based on 100 parts by weight of the polymerized resin.

The photocuring agent can serve to adjust adhesion of the adhesive composition or to impart a crosslinked structure thereto depending upon the amount of the used photoinitiator. For example, the photocuring agent may include polar monomers of polyfunctional acrylates. Specifically, the photocuring agent may include at least one selected from the group consisting of 1,4-butanediol di(meth)acrylate, 1,6-hexanediol di(meth)acrylate, neopentyl glycol di(meth)acrylate, 1,2-ethylene glycol di(meth)acrylate, polyethylene glycol di(meth)acrylate, 1,12-dodecanediol di(meth)acrylate, neopentyl glycol adipate di(meth)acrylate, hydroxypivalic acid neopentyl glycol di(meth)acrylate, dicyclopentanyl di(meth)acrylate, caprolactone-modified dicyclopentanyl di(meth)acrylate, ethylene oxide-modified di(meth)acrylate, di(meth)acryloxy ethyl isocyanurate, allylated cyclohexyl di(meth)acrylate, tricyclodecanedimethanol (meth)acrylate, dimethylol dicyclopentane di(meth)acrylate, ethylene oxide-modified hexahydrophthalic acid di(meth)acrylate, tricyclodecanedimethanol (meth)acrylate, neopentyl glycol-modified trimethylpropane di(meth)acrylate, adamantane di(meth)acrylate, 9,9-bis[4-(2-acryloyloxyethoxy)phenyl]fluorene, trimethylolpropane tri(meth)acrylate, dipentaerythritol tri(meth)acrylate, propionic acid-modified dipentaerythritol tri(meth)acrylate, pentaerythritol tri(meth)acrylate, propylene oxide-modified trimethylolpropane tri(meth)acrylate, tris(meth)acryloxyethyl isocyanurate, diglycerin tetra(meth)acrylate, pentaerythritol tetra(meth)acrylate, propionic acid-modified dipentaerythritol penta(meth)acrylate, dipentaerythritol hexa(meth)acrylate, caprolactone-modified dipentaerythritol hexa(meth)acrylate, and urethane (meth)acrylate which is a reaction product of an isocyanate monomer and trimethylolpropane tri(meth)acrylate.

The photocuring agent may be present in an amount of 0.05 parts by weight to 2 parts by weight, based on 100 parts by weight of the polymerized resin. Within this range, there is no concern of deterioration in durability of the adhesive composition due to deterioration in cohesion, and there is also no concern of deterioration in durability thereof under high temperature and high humidity conditions.

The method for preparing an adhesive composition includes adding the hollow glass fillers to the mixture or injecting the bubbles into the mixture.

When the adhesive composition simultaneously include the hollow glass fillers and the bubbles, first, the hollow glass fillers may be added to the mixture, followed by stirring, thereby preparing an adhesive mixture. Next, the adhesive mixture may be subjected to vacuum degassing using a vacuum pump, followed by injecting the bubbles into the adhesive mixture, thereby preparing an adhesive composition according to the present invention.

The method for preparing an adhesive composition may further include curing the mixture including the hollow glass filler or the bubbles therein. By curing, the adhesive composition can be coated onto one surface or both surfaces of acrylic foam.

Since the photoinitiator is required to be activated to cure the mixture, it is important to irradiate the mixture including the hollow glass filler or the bubbles therein with active energy rays. The active energy rays may include ionizing radiation, such as α-rays, β-rays, gamma rays, neutron rays, electron beams ultraviolet rays. In particular, ultraviolet rays are suitable as the active energy rays. In addition, the photoinitiator may be activated to cause curing of the mixture using any irradiation energy, irradiation time, irradiation method for the active energy rays without limitation.

In addition, to suppress or prevent bursting of the hollow glass fillers or the bubbles, addition of the hollow glass fillers or injection of the bubbles and curing may be successively performed. Specifically, the mixture including the hollow glass filler or the bubbles therein may be coated onto a predetermined surface, followed by drying or curing, as needed, thereby preparing an adhesive composition coating layer.

That is, the hollow glass fillers or the bubbles may be added to or injected into the mixture including the surfactant, the photoinitiator and the photocuring agent, followed by coating the mixture onto a predetermined surface, and then subjected to heating or active energy ray irradiation, thereby preparing the adhesive composition coating layer. Here, the adhesive composition coating layer may include the hollow glass fillers or the bubbles, which are uniformly dispersed.

Hereinafter, the present invention will be described in more detail with reference to some examples. It should be understood that these examples are provided for illustration only and are not to be construed in any way as limiting the present invention.

### Example 1 (not according to the invention)

11 parts by weight of a polar acrylic acid monomer was added to a 1 liter glass reactor based on 100 parts by weight of 2-ethylhexyl acrylate, followed by thermal polymerization, thereby obtaining a copolymer having a viscosity of 3500 cP. 0.5 parts by weight of Irgacure-651 (α,α-methoxy-α-hydroxyacetophenone) as a photoinitiator, and 0.35 parts by weight of 1,6-hexanediol diacrylate (HDDA) as a crosslinking agent were added to 100 parts by weight of the thermally polymerized resin, followed by sufficient stirring, thereby preparing a mixture.

4.5 parts by weight of glass bubbles and 1.5 parts by weight of silica were added to the prepared mixture, followed by sufficient stirring until the components were uniformly mixed. Next, the mixture was subjected to vacuum degassing using a vacuum pump.

Next, nitrogen gas and 2 parts by weight of a silicone surfactant (based on 100 parts by weight of the thermally polymerized copolymer) were injected into the vacuum-degassed mixture using a foaming agent (Frother). Next, an adhesive composition was coated to a thickness of 0.8 mm onto a PET film through a UV curing apparatus, thereby manufacturing an acrylic foam tape. Here, a coating temperature was maintained at 10°C.

### Example 2 (not according to the invention)

An acrylic foam tape was prepared in the same manner as in Example 1 except that the coating temperature was set to 25°C.

### Example 3

An acrylic foam tape was prepared in the same manner as in Example 2 except that 25 parts by weight of 2-hydroxyethyl acrylate was present based on 100 parts by weight of 2-ethylhexyl acrylate.

### Example 4 (not according to the invention)

An acrylic foam tape was prepared in the same manner as in Example 2 except that 5 parts by weight of 2-hydroxyethyl acrylate was present based on 100 parts by weight of 2-ethylhexyl acrylate.

### Example 5 (not according to the invention)

An acrylic foam tape was prepared in the same manner as in Example 2 except that 40 parts by weight of 2-hydroxyethyl acrylate was present based on 100 parts by weight of 2-ethylhexyl acrylate.

### Example 6 (not according to the invention)

An acrylic foam tape was prepared in the same manner as in Example 1 except that 50 parts by weight of the polar acrylic acid monomer was present based on 100 parts by weight of 2-ethylhexyl acrylate.

### Comparative Example 1

An acrylic foam tape was prepared in the same manner as in Example 1 except that 3 parts by weight of the polar acrylic acid monomer was present based on 100 parts by weight of 2-ethylhexyl acrylate.

### Comparative Example 2

An acrylic foam tape was prepared in the same manner as in Example 2 except that 3 parts by weight of the polar acrylic acid monomer was present based on 100 parts by weight of 2-ethylhexyl acrylate.

### Comparative Example 3

An acrylic foam tape was prepared in the same manner as in Example 2 except that 60 parts by weight of 2-hydroxyethyl acrylate was present based on 100 parts by weight of 2-ethylhexyl acrylate.

### Experimental Example - Bubble stability depending upon copolymer composition

To evaluate stability of glass bubbles or bubbles according to different composition ratios of a (meth)acrylic acid ester monomer and a polar functional group-containing monomer, density and the number of bubbles were measured on each of specimens prepared in Examples and Comparative Examples.
1) Density: Density of each of the specimens of Examples and Comparative Examples was measured using an electronic solid gravimeter (DME-220E).
2) Number of bubbles: The number of bubbles was measured on an SEM image of each of the specimens of Examples and Comparative Examples, followed by analyzing the number of bubbles in a certain area (500 µm×1000 µm). Here, objects looking like protrusions were considered glass fillers, objects looking like dents were considered bubbles, and only the number of bubbles was determined.

**Table 1 * not according to the invention**

| | Temperature (°C) | Copolymer constitution (based on 100 parts by weight of 2-EHA) | Density of adhesive composition (g/m3) | Number of bubbles in adhesive composition | Stability |
|---|---|---|---|---|---|
| Example 1 * | 10 | AA 11 parts by weight | 0.72 | 15 | O |
| Example 2* | 25 | AA 11 parts by weight | 0.74 | 12 | O |
| Example 3 | 25 | 2-HEA 25 parts by weight | 0.73 | 14 | O |
| Example 4* | 25 | 2-HEA 5 parts by weight | 0.69 | 16 | O |
| Example 5* | 25 | 2-HEA 50 parts by weight | 0.72 | 13 | O |
| Example 6* | 10 | AA 40 parts by weight | 0.73 | 14 | O |
| Comparative Example 1 | 10 | AA 3 parts by weight | 0.81 | 7 | X |
| Comparative Example 2 | 25 | AA 3 parts by weight | 0.83 | 6 | X |
| Comparative Example 3 | 25 | 2-HEA 60 parts by weight | 0.84 | 6 | X |

Referring to Table 1, the adhesive compositions of Examples 1 to 6 including the copolymer, in which the (meth)acrylic acid ester monomer and the polar functional group-containing monomer were mixed in a ratio within the range according to the present invention, had a density of 0.8 g/m³ or less, regardless of external temperature. Since the adhesive compositions of Examples 1 to 6 had a lower density than those of Comparative Examples 1 to 3, it could be inferred that the bubbles were dispersed well in the adhesive compositions of Examples 1 to 6. In addition, since the adhesive compositions of Examples 1 to 6 had 10 or more bubbles per unit area, it could be seen that the adhesive compositions of Examples 1 to 6 exhibited excellent bubble stability.

On the contrary, since the adhesive compositions of Comparative Examples 1 to 3 included the copolymer in which the (meth)acrylic acid ester monomer and the polar functional group-containing monomer were mixed in a different ratio from the ratio according to the present invention, the adhesive compositions of Comparative Examples 1 to 3 had higher density than those of Examples 1 to 6, and had the small number of bubbles, that is, 7 or fewer bubbles. As such, it could be seen that the adhesive compositions of Comparative Examples 1 to 3 exhibited deterioration in dispersibility of the bubbles due to bursting of the bubbles and this result was caused by the monomer composition in the copolymer of the adhesive composition.

## Claims

1. An adhesive composition comprising:
a copolymer in which 15 parts by weight to 40 parts by weight of 2-hydroxyethyl (meth)acrylate monomer is polymerized based on 100 parts by weight of an alkyl (meth)acrylic acid ester monomer, and
hollow glass fillers or bubbles,
wherein the hollow glass fillers are present in an amount of 0.1 parts by weight to 20 parts by weight based on 100 parts by weight of the alkyl (meth)acrylic acid ester monomer,
wherein the adhesive composition has a density, measured by using an electronic solid gravimeter, from 0.6 g/m³ to 0.8 g/m³.

2. The adhesive composition according to claim 1, wherein the alkyl acrylic acid ester monomer comprises at least one selected from the group consisting of methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl (meth)acrylate, isooctyl (meth)acrylate, isononyl (meth)acrylate, lauryl (meth)acrylate, tetradecyl (meth)acrylate, and combinations thereof.

3. The adhesive composition according to claim 1, wherein the hollow glass fillers or the bubbles have a spherical shape.

4. A method for preparing an adhesive composition according to claim 1, comprising:
preparing a copolymer by thermally polymerizing 15 parts by weight to 40 parts by weight of 2-hydroxyethyl (meth)acrylate monomer based on 100 parts by weight of an alkyl (meth)acrylic acid ester monomer;
preparing a mixture by adding a surfactant, a photoinitiator and a photocuring agent to the copolymer; and
adding hollow glass fillers in an amount of 0.1 parts by weight to 20 parts by weight based on 100 parts by weight of the (meth)acrylic acid ester monomer, to the mixture or injecting bubbles into the mixture.

5. The method according to claim 4, wherein the thermal polymerization is performed at a temperature of 50°C to 60°C for 2 hours.

6. The method according to claim 4, further comprising:
curing the mixture comprising the hollow glass filler or the bubbles therein.

## Patentansprüche

1. Klebstoffzusammensetzung, umfassend:
ein Copolymer, in dem 15 Gewichtsteile bis 40 Gewichtsteile von 2-Hydroxyethyl(meth)acrylat-Monomer, basierend auf 100 Gewichtsteilen eines Alkyl(meth)acrylsäureester-Monomers, polymerisiert sind, und
hohle Glasfüllstoffe oder Blasen,
wobei die hohlen Glasfüllstoffe in einer Menge von 0,1 Gewichtsteilen bis 20 Gewichtsteilen, basierend auf 100 Gewichtsteilen des Alkyl(meth)acrylsäureester-Monomers, vorhanden sind,
wobei die Klebstoffzusammensetzung eine Dichte, gemessen unter Verwendung eines elektronischen Feststoff-Gravimeters, von 0,6 g/m³ bis 0,8 g/m³ aufweist.

2. Klebstoffzusammensetzung nach Anspruch 1, wobei das Alkylacrylsäureester-Monomer mindestens eines umfasst, ausgewählt aus der Gruppe bestehend aus Methyl(meth)acrylat, Ethyl(meth)acrylat, n-Propyl(meth)acrylat, Isopropyl(meth)acrylat, n-Butyl(meth)acrylat, t-Butyl(meth)acrylat, sec-Butyl(meth)acrylat, Pentyl(meth)acrylat, 2-Ethylhexyl(meth)acrylat, 2-Ethylbutyl(meth)acrylat, n-Octyl(Meth)acrylat, Isooctyl(meth) acrylat, Isononyl(meth)acrylat, Lauryl(meth)acrylat, Tetradecyl(meth)acrylat und Kombinationen davon.

3. Klebstoffzusammensetzung nach Anspruch 1, wobei die hohlen Glasfüllstoffe oder die Blasen eine sphärische Form aufweisen.

4. Verfahren zur Herstellung einer Klebstoffzusammensetzung nach Anspruch 1, umfassend:
Herstellen eines Copolymers durch thermisches Polymerisieren von 15 Gewichtsteilen bis 40 Gewichtsteilen von 2-Hydroxyethyl(meth)acrylat-Monomer, basierend auf 100 Gewichtsteilen eines Alkyl(meth)acrylsäureester-Monomers;
Herstellen einer
Mischung durch Hinzufügen eines Tensids, eines Photoinitiators und eines photohärtenden Mittels zu dem Copolymer; und
Hinzufügen hohler Glasfüllstoffe in einer Menge von 0,1 Gewichtsteilen bis 20 Gewichtsteilen, basierend auf 100 Gewichtsteilen des (Meth)acrylsäureester-Monomers zu der Mischung oder Injizieren von Blasen in die Mischung.

5. Verfahren nach Anspruch 4, wobei die thermische Polymerisation bei einer Temperatur von 50 °C bis 60 °C für 2 Stunden durchgeführt wird.

6. Verfahren nach Anspruch 4, ferner umfassend:
Härten der Mischung, umfassend den hohlen Glasfüllstoff oder die Blasen darin.

## Revendications

1. Composition adhésive, comprenant :
un copolymère dans lequel 15 parties en poids à 40 parties en poids de monomère de (méth)acrylate de 2-hydroxyéthyle sont polymérisées sur la base de 100 parties en poids d'un monomère d'ester d'acide alkyl(méth)acrylique et
des charges de verre creux ou des bulles,
dans laquelle les charges de verre creux sont présentes en une quantité de 0,1 partie en poids à 20 parties en poids sur la base de 100 parties en poids du monomère d'ester d'acide alky(méth)acrylique,
dans laquelle la composition adhésive a une densité, mesurée en utilisant un gravimètre électronique pour solides, de 0,6 g/m³ à 0,8 g/m³.

2. Composition adhésive selon la revendication 1, dans laquelle le monomère d'ester d'acide alkyl acrylique comprend au moins un sélectionné dans le groupe consistant en le (méth)acrylate de méthyle, le (méth)acrylate d'éthyle, le (méth)acrylate de n-propyle, le (méth)acrylate d'isopropyle, le (méth)acrylate de n-butyle, le (méth)acrylate de t-butyle, le (méth)acrylate de sec-butyle, le (méth)acrylate de pentyle, le (méth)acrylate de 2-éthylhexyle, le (méth)acrylate de 2-éthylbutyle, le (méth)acrylate de n-octyle, le (méth)acrylate d'isooctyle, le (méth)acrylate d'isononyle, le (méth)acrylate de lauryle, le (méth)acrylate de tétradécyle, et les combinaisons de ceux-ci.

3. Composition adhésive selon la revendication 1, dans laquelle les charges de verre creux ou les bulles ont une forme sphérique.

4. Procédé de préparation d'une composition adhésive selon la revendication 1, comprenant :
la préparation d'un copolymère par polymérisation thermique de 15 parties en poids à 40 parties en poids de monomère de (méth)acrylate de 2-hydroxyéthyle sur la base de 100 parties en poids d'un monomère d'ester de l'acide alkyl(méth)acrylique ;
la préparation d'un mélange par ajout d'un surfactant, d'un photoinitiateur et d'un agent de photodurcissement au copolymère ; et
l'ajout de charges de verre creux en une quantité de 0,1 partie en poids à 20 parties en poids sur la base de 100 parties en poids du monomère d'ester d'acide (méth)acrylique, au mélange ou l'injection de bulles dans le mélange.

5. Procédé selon la revendication 4, dans lequel la polymérisation thermique est réalisée à une température de 50 °C à 60 °C pendant 2 heures.

6. Procédé selon la revendication 4, comprenant en outre :
le durcissement du mélange comprenant la charge de verre creux ou les bulles à l'intérieur.
